# DEMANDE DE BREVET EUROPEEN

(11) **EP 1 371 612 A1**
(43) Date de publication de la demande: **17.12.2003**
(21) Numéro de dépôt: 03354054.3
(22) Date de dépôt: 06.06.2003
(51) Int. Cl.: C02F 1/72, C02F 1/02, C02F 11/08

(54) **Dispositif de traitement d'oxydation en voie humide d'effluents industriels, urbains, agricoles ou petroliers**

(30) Priorité: 11.06.2002 FR 0207154
(71) Demandeur: Constructions Mécaniques Consultants, 38560 Champ Sur Drac (FR)
(72) Inventeur: Simon, Jean, 38560 Champ sur Drac (FR); Ambrosio, Maurice, 13012 Marseille (FR)
(74) Mandataire: Jouvray, Marie-Andrée

(57) **Abrégé**

Le dispositif de traitement des effluents chargés en matière organique et/ou en composés azotés, comporte un diffuseur (7) disposé dans une phase liquide constituée par les effluents. Le diffuseur (7) comporte au moins une paroi poreuse permettant de diffuser et de fractionner l'oxydant lors de sa diffusion dans la phase liquide, dans une pluralité de directions. L'oxydant entre dans une chambre de diffusion (15) du diffuseur (7) et se répand dans des organes de diffusion (22) montés à la périphérie de la chambre de diffusion (15) du diffuseur (7). L'oxydant est alors diffusé dans la phase liquide des effluents à traiter, par les parois poreuses des organes de diffusion (22), ce qui permet de fractionner l'oxydant en de nombreuses petites bulles d'oxydant qui pourront réagir avec les effluents, de manière à créer une surface de contact maximale.

## Description

### Domaine technique de l'invention

L'invention concerne un dispositif de traitement d'oxydation en voie humide d'effluents industriels, urbains, agricoles ou pétroliers, chargés en matière organique et/ou en composés azotés, comportant un diffuseur d'oxydant dans une phase liquide comportant les effluents à traiter, une phase gazeuse étant ménagée au-dessus de la phase liquide et le diffuseur comportant des moyens de fractionnement et de dispersion de l'oxydant lors de sa diffusion dans la phase liquide de manière à obtenir une surface de contact maximale entre l'oxydant et les effluents.

### État de la technique

Le traitement d'épuration des effluents industriels, urbains, agricoles ou pétroliers, chargés en matière organique et/ou en composés azotés, est souvent réalisé par oxydation en milieu humide. Cette technique vise à réaliser une oxydation poussée de la matière organique contenue dans des solutions ou des suspensions présentant une forte proportion de matière organique biodégradable ou non, et éventuellement toxique. L'oxydation en voie humide consiste à mettre en contact les constituants à oxyder et l'oxydant dissous dans des conditions de température (100°C à 374°C) qui permettent une oxydation rapide, les effluents à traiter étant maintenus en phase liquide par une pressurisation (50 bars à 220 bars).

Les dispositifs connus utilisant cette technique, sont généralement des réacteurs à bulles, dont le principe est d'injecter au bas d'une colonne cylindrique, le déchet aqueux préchauffé et de l'air comprimé, la réaction d'oxydation se déroulant en phase ascendante dans la colonne. En injectant l'oxydant (air comprimé), le transfert de l'oxydant dans la phase liquide se fait lentement alors que pour être efficace, il devrait se faire de manière instantanée. La réduction de la demande chimique en oxygène (DCO) de l'effluent est alors faible, ce qui nécessite des traitements postérieurs des déchets restants tels que le traitement biologique. Ainsi le brevet WO-A-9525698 décrit un procédé de traitement d'effluents chargés en matière organique avec recyclage des résidus solides. L'oxydation en voie humide est alors intégrée dans une chaîne complète de traitement biologique et les effluents issus du procédé sont recyclés dans des digesteurs. L'oxydation est alors considérée comme un simple réducteur de DCO inclus dans une chaîne de traitement biologique.

L'oxydation en voie humide peut également se faire en eau supercritique, c'est-à-dire dans des conditions de température et de pression situées au-dessus du point critique de l'eau (T°>374°C et P>221 bars). La vitesse de réaction est alors fortement accélérée, mais ces conditions favorisent la corrosion des métaux et le bouchage des canalisations dû à l'insolubilité des matières minérales, ce qui rend le procédé très coûteux.

Pour augmenter la vitesse de réaction, il est possible d'utiliser des catalyseurs de réaction, homogènes ou hétérogènes. L'utilisation de catalyseurs homogènes, tels que les sels de cuivre ou de fer, engendre généralement une pollution secondaire liée aux complexes métalliques restés en solution, nécessitant alors un second traitement des résidus. C'est pourquoi on utilise généralement des catalyseurs hétérogènes. Ainsi le document WO-A-9613463 décrit l'utilisation d'un catalyseur hétérogène disposé à l'intérieur du réacteur, au-dessus de l'interface entre la phase gazeuse et la phase liquide.

Le document JP04 243597 décrit un appareil pour stériliser, désodoriser et décomposer des substances organiques grâce à de l'ozone. L'appareil comprend un support en matériau céramique poreux à la surface duquel est disposé un catalyseur destiné à décomposer l'ozone. Le support en céramique poreux est utilisé comme matériau diffusant l'ozone gazeux. Le catalyseur est déposé sur le support en céramique poreux par placage ou par revêtement avec une flamme. Il est également possible de mélanger le catalyseur avec le support poreux, de mouler le mélange et de le fritter. Un tel appareil permet à l'ozone gazeux d'être entièrement en contact avec le catalyseur juste après avoir été diffusé, de manière à former des ions hydroxyles destinés à décomposer les substances organiques.

### Objet de l'invention

L'invention a pour but un procédé de traitement d'épuration des effluents industriels, urbains, agricoles ou pétroliers dont le rendement et la vitesse de la réaction d'oxydation sont améliorés, tout en minimisant le besoin de traitements complémentaires des effluents.

Selon l'invention, ce but est atteint par les revendications annexées.

Plus particulièrement, ce but est atteint par le fait que le diffuseur est disposé dans la phase liquide et comporte un orifice d'entrée connecté à une source d'alimentation en oxydant et au moins une chambre de diffusion communiquant avec l'orifice d'entrée de manière à diffuser l'oxydant dans la phase liquide à la périphérie du diffuseur, dans une pluralité de directions.

Selon un développement de l'invention, le diffuseur comporte au moins un catalyseur, les moyens de fractionnement et de dispersion comportant, plus particulièrement, au moins une paroi poreuse.

Selon un mode de réalisation particulier, la chambre de diffusion comporte sur sa périphérie au moins une ouverture dans laquelle est monté un organe de diffusion comportant ladite paroi poreuse.

Selon un autre mode de réalisation, la chambre de diffusion est annulaire, comporte ladite paroi poreuse et est connectée par des tuyaux de diffusion à des orifices disposés à la périphérie d'un tube d'entrée.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
La figure 1 est une vue schématique d'un réacteur d'oxydation en voie humide selon l'invention.
La figure 2 est une vue en perspective d'un premier mode de réalisation d'un diffuseur d'un dispositif selon l'invention.
La figure 3 représente une vue en perspective d'un corps de diffuseur selon la figure 2.
La figure 4 est une vue de face du corps du diffuseur selon la figure 2.
Les figures 5 et 6 représentent respectivement une vue en coupe selon A-A et une vue en coupe selon B-B du corps du diffuseur selon la figure 4.
La figure 7 est une vue de dessus d'un second mode de réalisation d'un diffuseur d'un dispositif selon l'invention.
La figure 8 est une vue en coupe selon C-C du diffuseur selon la figure 7.
Les figures 9 et 10 illustrent en perspective le diffuseur coupé selon C-C selon la figure 7.

### Description de modes particuliers de réalisation.

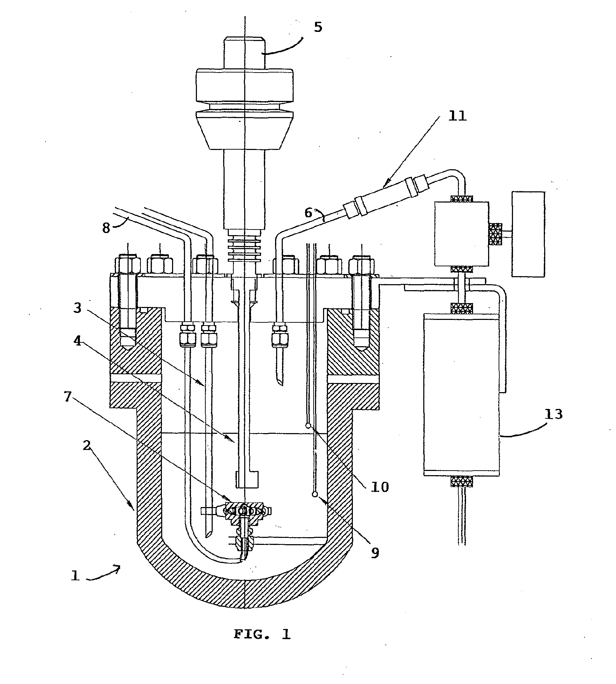

Selon la figure 1, des effluents destinés à être oxydés, sont introduits dans la cuve 2 d'un réacteur 1 par l'intermédiaire d'un tube d'alimentation en effluents 3. Le réacteur 1 est pourvu de moyens de chauffage permettant d'amener les effluents à une température comprise entre 150°C et 374°C. Des moyens de pressurisation sont prévus pour amener les effluents présents dans le réacteur sous une pression comprise entre 20 bars et 220 bars.

L'injection de l'oxydant dans la phase liquide constituée par les effluents dissous ou en suspension dans de l'eau, s'effectue au moyen d'un tube d'alimentation 8, relié à un diffuseur 7. L'oxydant peut être de l'air, de l'air enrichi, de l'oxygène ou du peroxyde d'hydrogène. Dans le cas du peroxyde d'hydrogène, l'oxydant se présente sous forme liquide. Dans les autres cas, il se présente sous forme gazeuse. L'oxydant est de préférence injecté sous pression. Le diffuseur 7 permet de fractionner l'oxydant en une multitude de bulles, créant une surface de contact importante entre l'oxydant et la phase liquide des effluents, permettant un transfert de matière efficace et rapide. Le mélange entre les effluents et l'oxydant peut être également favorisé par un agitateur 4 situé au centre de la cuve, verticalement sur la figure 1, et relié à un système d'entraînement 5. Le diffuseur 7 est de préférence réalisé à partir de matériaux résistant à la corrosion, aux milieux acides ou basiques, aux températures et aux pressions élevées.

L'oxydation en voie humide des effluents permet de minéraliser une partie importante de la matière organique et des composés azotés en diminuant fortement la demande chimique en oxygène ou DCO. Cette partie minérale peut être soutirée du réacteur pour être stockée ou retraitée. Lors de la réaction d'oxydation en voie humide, il se crée également une phase gazeuse constituée essentiellement de vapeur d'eau, d'oxygène, d'azote moléculaire et de dioxyde de carbone, celle-ci étant évacuée par une canalisation d'évacuation 6. De plus elle peut être traitée par l'intermédiaire d'un filtre 11 et par un refroidisseur 13, connectés à la canalisation d'évacuation 6. Des sondes 9 et 10 permettent de contrôler et de maintenir le niveau de la phase liquide dans le réacteur.

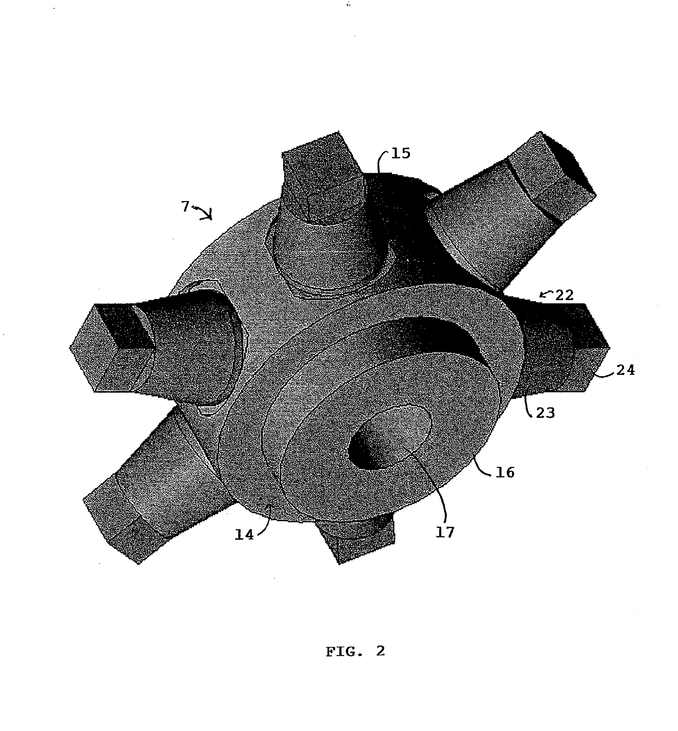

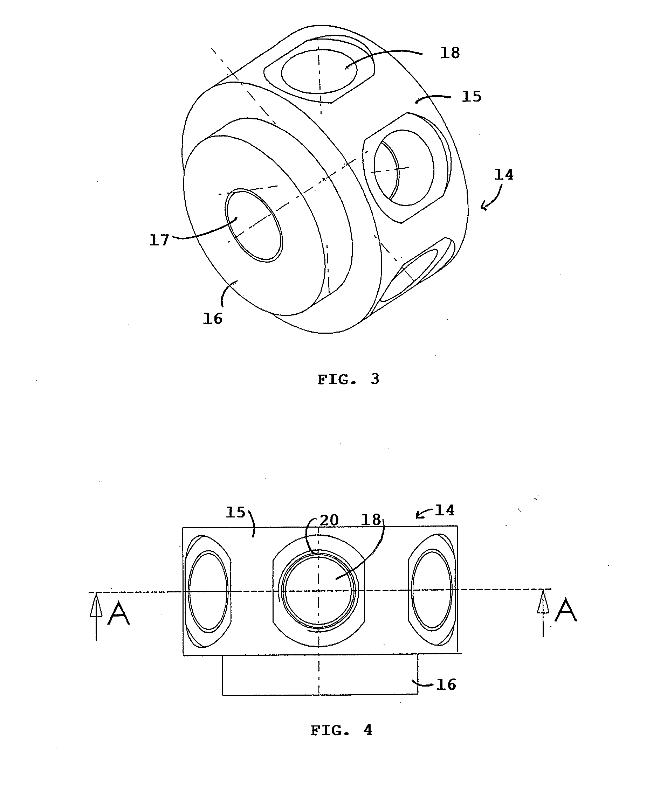

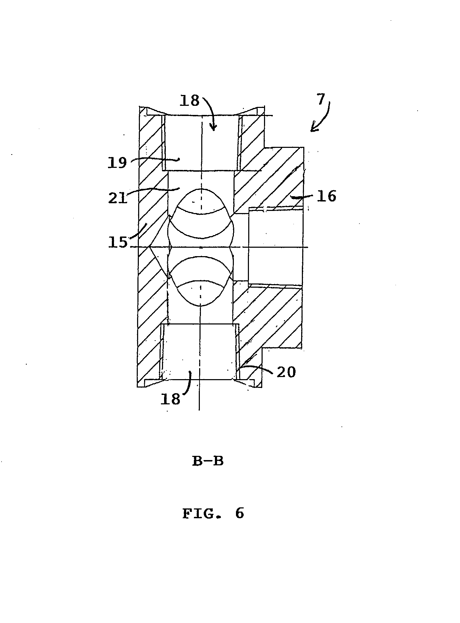

Le diffuseur 7 représenté sur les figures 2 à 6, comporte un corps 14 usiné comportant une chambre de diffusion 15 cylindrique et une base 16 cylindrique de diamètre inférieur à celui de la chambre de diffusion. La base 16 du corps du diffuseur comporte un orifice 17 cylindrique, communiquant avec la chambre de diffusion 15. L'orifice 17 est destiné à alimenter le corps du diffuseur 14 en oxydant, par l'intermédiaire du tube d'alimentation en oxydant 8 du réacteur 1 auquel il est relié (figure 1). La chambre de diffusion 15 comporte plusieurs ouvertures 18, de préférence six, disposées régulièrement et latéralement à la périphérie de la chambre de diffusion 15.

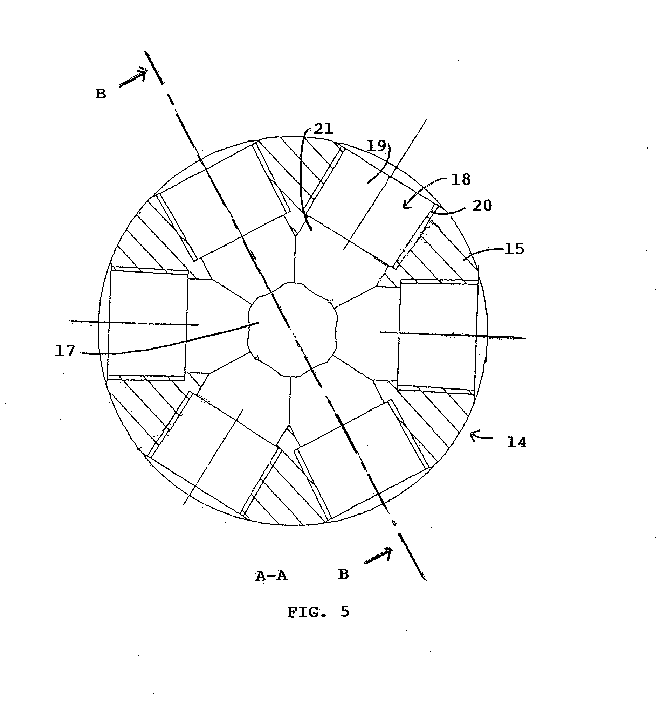

Comme représentée sur la figure 5, chacune des ouvertures 18 comporte une partie principale 19, de forme cylindrique, munie d'un filetage 20 dont une première extrémité débouche sur l'extérieur de la chambre de diffusion 15. La deuxième extrémité de la partie principale cylindrique 19 de chaque ouverture est reliée à une partie secondaire 21 de forme tronconique débouchant sur l'orifice 17. Des organes de diffusion 22, de préférence creux, sont vissés dans la partie principale de chacune des ouvertures 18 de la chambre de diffusion 15 (figure 2).

Les organes de diffusion 22 comportent de préférence une section intermédiaire 23 de forme tronconique, aux parois poreuses et reliée à une section cylindrique filetée, destinée à être vissée dans la partie principale 19 de l'ouverture 18. L'extrémité libre, la plus étroite, de la section 23 de chaque organe de diffusion 22 est de préférence solidarisée à un moyen de fixation carré 24, formant écrou, destiné à faciliter les opérations de vissage et de dévissage de l'organe de diffusion 22.

En fonctionnement, l'oxydant entre dans la chambre de diffusion 15 par l'intermédiaire de l'orifice 17 et se répand dans les organes de diffusion 22. L'oxydant est alors diffusé dans la phase liquide des effluents à traiter, par les parois poreuses des sections intermédiaires 23 des organes de diffusion 22, ce qui permet de fractionner l'oxydant en une myriade de petites bulles d'oxydant qui pourront réagir avec les effluents sur une très grande surface. La diffusion de l'oxydant est, ainsi, réalisée à la périphérie du diffuseur, dans une pluralité de directions et plus particulièrement, sensiblement à 360°.

La porosité des parois des sections intermédiaires 23 des organes de diffusion 22 peut être réalisée par tout type de procédé approprié, par exemple le frittage, la micro-perforation réalisée par perforation mécanique ou par perforation au laser. Le corps 14 du diffuseur est de préférence réalisé en acier inoxydable ou en titane. Les parois poreuses peuvent être réalisées à partir d'un matériau comportant un ou plusieurs éléments connus comme catalyseur de la réaction d'oxydation, ce qui permet d'accélérer la réaction.

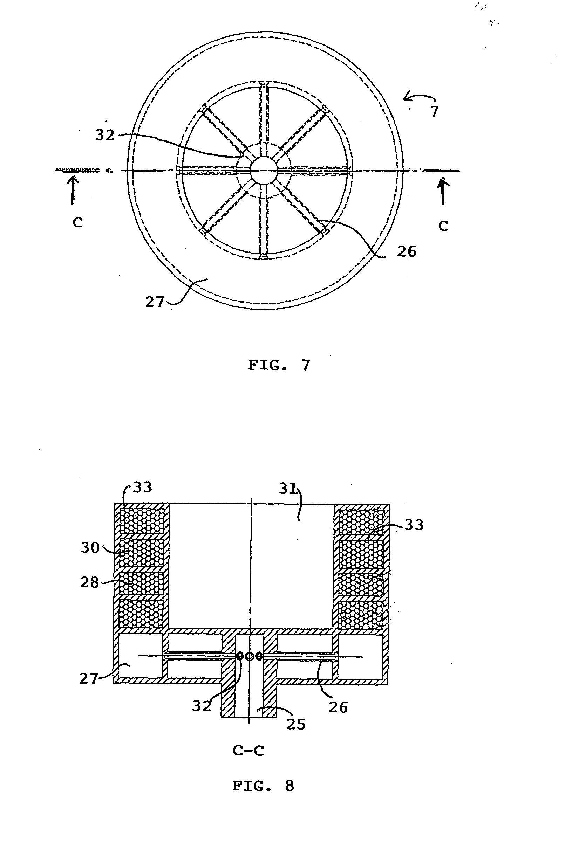

Selon une variante de réalisation, comme représentée sur les figures 7 à 10, le diffuseur 7 comporte un tube d'entrée 25 destiné à être relié au tube d'alimentation en oxydant 8 (Figure 1). Des orifices 32 sont disposés à la périphérie du tube d'entrée 25, et sont connectés par des tuyaux de diffusion 26 à une première chambre annulaire de diffusion 27.

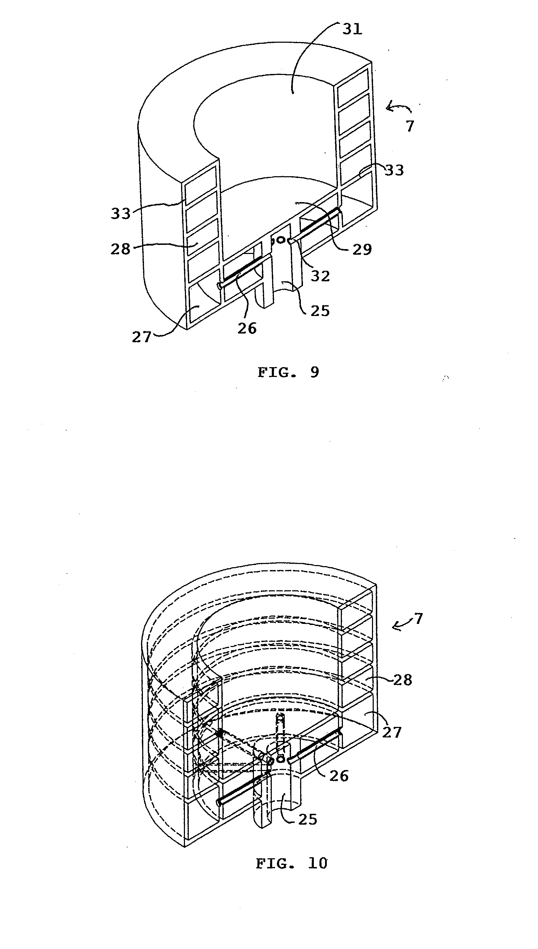

Sur la figure 7, les orifices 32 et les tuyaux de diffusion 26 sont au nombre de 8, répartis régulièrement à la périphérie du tube d'entrée 25. La chambre annulaire de diffusion 27 est surmontée par plusieurs chambres annulaires de diffusion 28 secondaires (Figure 8). Sur les figures 8 à 10, les chambres annulaires de diffusion 28 secondaires sont au nombre de quatre. L'ensemble constitué par les chambres annulaires de diffusion 27 et 28, forme un cylindrique de section annulaire, dont la base inférieure 29 peut être fermée (Figure 9).

Les parois 33 (Figure 8) formant les chambres annulaires de diffusion 27 et 28 sont poreuses. Ceci permet non seulement la diffusion et le fractionnement de l'oxydant vers l'extérieur du diffuseur mais aussi son ascension de la première chambre annulaire de diffusion 27 vers les chambres de diffusion secondaires 28. La diffusion et le fractionnement de l'oxydant est réalisé vers l'extérieur du diffuseur, dans une pluralité de directions et de préférence à 360°. La porosité des parois 33 permet également un meilleur fractionnement de l'oxydant d'une chambre de diffusion à l'autre.

Les pores ont, de préférence, une surface comprise entre quelques dixièmes de millimètres carrés et quelques millimètres carrés. Ils sont disposés de manière régulière sur les parois des chambres annulaires de diffusion, permettant aux effluents de pénétrer à l'intérieur des chambres annulaires de diffusion 27 et 28. Dans ce cas, une partie de la réaction d'oxydation a lieu à l'intérieur du diffuseur 7. L'excédent d'oxydant ne participant pas à l'oxydation de la quantité d'effluents présente dans le diffuseur, est diffusé dans la cuve 2 du réacteur 1 (figure 1) et oxyde le reste des effluents. L'agitateur 4 (figure 1) est de préférence disposé dans la partie centrale ouverte 31 du diffuseur 7, de manière à permettre une circulation efficace des effluents et de l'oxydant.

Un ou plusieurs catalyseurs hétérogènes 30 (Figure 8), fixés sur un support neutre, peuvent être disposés dans les chambres annulaires de diffusion, notamment dans les chambres annulaires secondaires 28, de manière à amorcer la réaction d'oxydation ou à la rendre plus rapide. La disposition des catalyseurs dans les chambres de diffusion accroît également le fractionnement de l'oxydant. Le ou les catalyseurs peuvent être remplacés par un matériau permettant de renforcer le fractionnement de l'oxydant, si la vitesse de réaction des effluents à oxyder est suffisante sans catalyseur. Ainsi, des pailles métalliques peuvent être disposées dans au moins une chambre annulaire de diffusion. Les pailles métalliques, créant une porosité à l'intérieur des chambres annulaires de diffusion, renforcent le fractionnement de l'oxydant fait par la porosité des parois des chambres annulaires de diffusion. Les pailles métalliques peuvent également jouer le rôle de catalyseur.

Les parois poreuses des chambres annulaires de diffusion sont de préférence en acier inoxydable, comme l'ensemble du diffuseur 7, mais elles peuvent également être constituées par un matériau ayant lui-même un effet catalytique sur la réaction d'oxydation des effluents à traiter. De plus la porosité des parois est réalisée par tout type de procédé approprié.

Quelque soit le mode de réalisation du diffuseur 7, le fractionnement de l'oxydant augmente significativement la surface de contact entre l'oxydant et les effluents et donc le rendement de réaction. Lorsque le matériau constituant les parois, comporte un catalyseur, la réaction d'oxydation est amorcée et/ou accélérée par le contact direct de l'oxydant et du catalyseur. Par exemple on utilisera un catalyseur composé d'un mélange d'oxyde métallique (cuivre, manganèse, cérium...) supporté sur alumine ou oxyde de titane. On peut également utiliser des catalyseurs sous forme de zéolithes, tels que les zéolithes synthétisés par voie naturelle sous haute pression. De tels zéolithes présentent l'avantage d'être stables dans les conditions de température et de pression du réacteur et ils comportent un système de micropores dans lequel peuvent pénétrer les chaînes carbonées des effluents à traiter. Ainsi, la destruction des chaînes carbonées a lieu à l'intérieur des micropores des zéolithes. Pour des micropores ayant chacun un diamètre de l'ordre de 0,6 nanomètres, les produits de décomposition sont libérés et l'azote est adsorbé sous forme d'oxydes d'azote de type NO_{X}. Pour des micropores ayant chacun un diamètre de l'ordre de 0,3 nanomètres, les oxydes d'azote se décomposent complètement sans adsorption.

Un tel dispositif de traitement d'oxydation en voie humide permet de traiter efficacement des effluents industriels, urbains, agricoles ou pétroliers, chargés en matière organique et/ou en composés azotés, et ce en utilisant, le plus souvent, un oxydant peu coûteux tel que l'air. En effet, le diffuseur permet de fractionner l'oxydant en une multitude de bulles et de diffuser l'oxydant, à la périphérie du diffuseur et dans une pluralité de directions. Ceci permet de créer une très grande surface de contact entre l'oxydant et la phase liquide des effluents et donc d'améliorer le rendement et la vitesse de la réaction d'oxydation, tout en minimisant le besoin de traitements complémentaires des effluents. A titre d'exemple, le dispositif permet de traiter efficacement les lisiers, les résidus pétroliers, les boues et les résidus industriels de papeterie et de sucrerie. Il permet, également, de traiter des farines animales en utilisant des conditions de température en dessous de la température critique.

L'invention n'est pas limitée aux modes de réalisations particuliers ci-dessus. Il est notamment possible d'utiliser des catalyseurs homogènes ou hétérogènes situés directement dans la cuve du réacteur.

## Revendications

1. Dispositif de traitement d'oxydation en voie humide d'effluents industriels, urbains, agricoles ou pétroliers, chargés en matière organique et/ou en composés azotés, comportant un diffuseur (7) d'oxydant dans une phase liquide comportant les effluents à traiter, une phase gazeuse étant ménagée au-dessus de la phase liquide et le diffuseur (7) comportant des moyens de fractionnement et de dispersion de l'oxydant lors de sa diffusion dans la phase liquide de manière à obtenir une surface de contact maximale entre l'oxydant et les effluents, **caractérisé en ce que** le diffuseur (7) est disposé dans la phase liquide et comporte un orifice d'entrée (17, 25) connecté à une source d'alimentation en oxydant (8) et au moins une chambre de diffusion (15, 27) communiquant avec l'orifice d'entrée (17, 25) de manière à diffuser l'oxydant dans la phase liquide à la périphérie du diffuseur (7), dans une pluralité de directions.

2. Dispositif selon la revendication 1, **caractérisé en ce que** le diffuseur (7) comporte au moins un catalyseur.

3. Dispositif selon l'une des revendications 1 et 2, **caractérisé en ce que** les moyens de fractionnement et de dispersion comportent au moins une paroi poreuse.

4. Dispositif selon la revendication 3, **caractérisé en ce que** la paroi poreuse comporte un catalyseur hétérogène.

5. Dispositif selon l'une des revendications 3 et 4, **caractérisé en ce que** la chambre de diffusion (15) comporte sur sa périphérie au moins une ouverture (18) dans laquelle est monté au moins un organe de diffusion (22) comportant ladite paroi poreuse.

6. Dispositif selon l'une des revendications 3 et 4, **caractérisé en ce que** la chambre de diffusion (27) est annulaire, comporte ladite paroi poreuse (33) et est connectée par des tuyaux de diffusion (26) à des orifices (32) disposés à la périphérie d'un tube d'entrée (25).

7. Dispositif selon la revendication 6, **caractérisé en ce que** la chambre annulaire de diffusion (27) est surmontée par au moins une chambre annulaire de diffusion (28) secondaire comportant également au moins une paroi poreuse (33).

8. Dispositif selon la revendication 7, **caractérisé en ce qu'**un catalyseur (30) est disposé à l'intérieur d'au moins une chambre annulaire de diffusion (27, 28).

9. Dispositif selon l'une des revendications 7 et 8, **caractérisé en ce qu'**un matériau permettant de renforcer le fractionnement de l'oxydant est disposé à l'intérieur d'au moins une chambre annulaire de diffusion (27, 28).
